# EUROPEAN PATENT SPECIFICATION

(11) **EP 1 728 914 B1**
(45) Date of publication and mention of the grant of the patent: **19.05.2010**
(21) Application number: 06425215.8
(22) Date of filing: 29.03.2006
(51) Int. Cl.: D06F 75/12, D06F 75/18, A47J 27/00, F22B 1/28

(54) **Steam channelling plate and devices incorporating said plate**
Dampfleitungsplatte und Vorrichtungen mit dieser Platte
Plaque pour diriger la vapeur et dispositifs comportant ladite plaque

(30) Priority: 30.05.2005 IT RN20050040
(43) Date of publication of application: 06.12.2006
(73) Proprietor: CO.M.E.L. S.r.l., 61045 Pergola (PU) (IT)
(72) Inventor: Lancia, Floriano, 61045 Pergola (PU) (IT)
(74) Representative: Ghioni, Carlo Raoul Maria

(56) References cited:
- DE-A1- 1 958 301
- DE-C- 855 685
- DE-U- 6 813 401
- GB-A- 686 569
- GB-A- 2 067 600
- US-A- 4 594 800

## Description

This invention relates to a steam channelling plate with a specially shaped labyrinth path inside it. The invention also relates to a steam iron and to a steam cooking device incorporating said plate.

Documents GB686569A, DE855685C, DE6813401U, US4594800A, DE1958301A1, disclose electric irons which comprise a plurality of interconnected pockets constituting a tortuous path through which in use of the iron, steam is constrained to pass before reaching an outlet.

Steam channelling plates are known which have a channel extending mainly in a single direction or shaped like a series of square waves with large amplitude and short wavelength. A series of pockets extend along this steam channel before the outfeed section through which the steam leaves the plate. These pockets cause the steam to flow through a series of wide and narrow portions.

Irons equipped with plates of this kind are known but have some disadvantages.

The steam generated by the boiler cools as it flows towards the plate, forming unwanted drops of condensed liquid. Especially when ironing synthetic fabrics with prior art devices, these liquid drops are carried by the steam flowing along the channel and are expelled from the plate together with the steam. This is because synthetic fabrics, to avoid being damaged, must be ironed at lower temperatures than those usually used for natural fibre fabrics such as linen or cotton. In prior art devices, this is achieved by lowering the thermostat setting which, however, means that some of the steam condenses and ends up as drops of liquid on the fabrics being ironed. These leave marks on the fabric and reduce the overall quality of ironing.

It is an aim of this invention to overcome the above mentioned disadvantages by providing a steam channelling plate having a specially shaped labyrinth path inside it so as to produce a jet of steam that is sufficiently moist but does not contain drops of liquid, while at the same time optimising the temperature of the plate.

Another aim of the invention is to provide a steam iron that incorporates the plate according to the invention.

Yet another aim of the invention is to provide a steam cooking device that incorporates the plate according to the invention.

These aims and others, which shall become more readily apparent in the course of the description that follows, are achieved, in accordance with the present invention, by a steam channelling plate with a specially shaped labyrinth path inside it and having the structural and functional characteristics defined in the accompanying independent claims, other embodiments of the invention being defined in the dependent claims.

The invention is described in more detail below with reference to the accompanying drawings which, without limiting its scope, illustrate a preferred embodiment of it relating in particular to the application of the plate to a steam iron.
- Figure 1 is a perspective view of the plate according to the invention;
- Figure 1a is an enlarged view of the detail shown in Figure 1;
- Figure 2 is a perspective view of a part of the plate according to the invention;
- Figure 2a is an enlarged view of the detail shown in Figure 2;
- Figures 3 and 4 illustrate a part of the plate of Figure 1 in a side view and plan view, respectively;
- Figure 5 is a cross section of the part of the plate of Figure 4 through the sectional plane A-A shown in Figure 4;
- Figure 6 is a plan view of the part of the plate of Figure 2;
- Figure 7 is a cross section of the part of the plate of Figure 6 through the sectional plane B-B shown in Figure 6;
- Figure 8 is a schematic cross section of the assembled plate of Figure 1 through the sectional plane C-C shown in Figures 4 and 6;

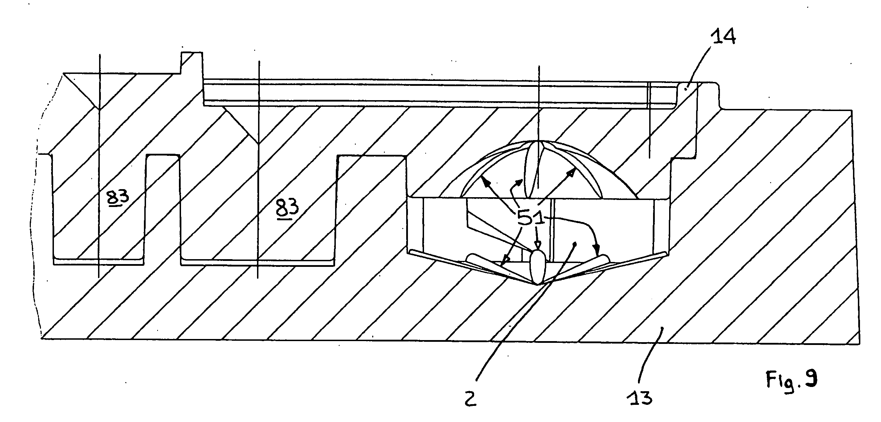

- Figure 9 illustrates in cross section an enlarged detail of the assembly of the parts shown in Figures 5 and 7.

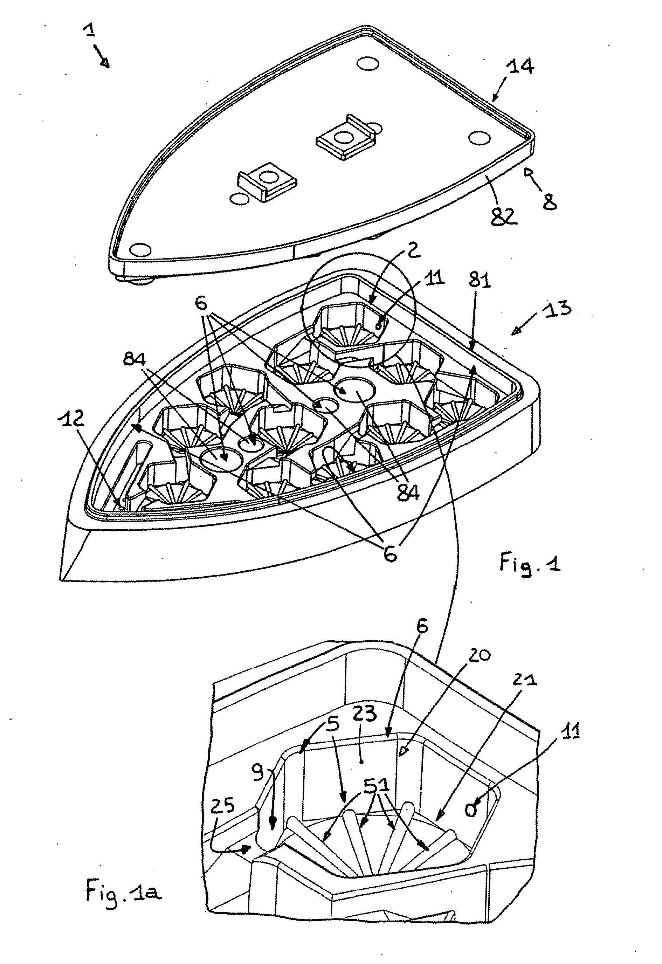

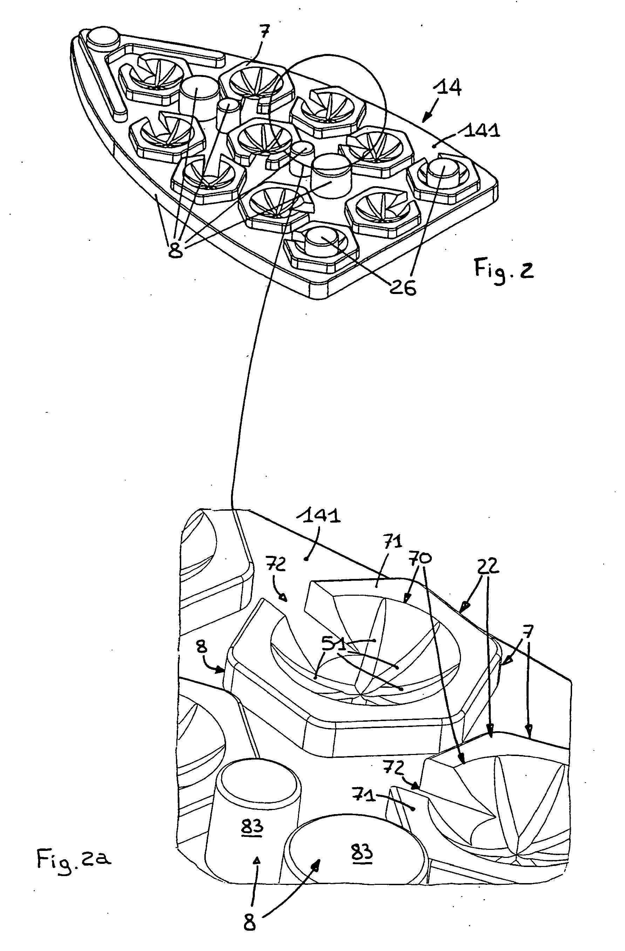

With reference to Figure 1, the numeral 1 denotes a steam channelling plate having a specially shaped labyrinth path 4 for a fluid inside it. The path 4 comprises a fluid infeed section 11, a fluid outfeed section 12, a plurality of pockets 2 and ducts 3. The ducts 3 fluid dynamically interconnect the pockets 2 with each other and with the infeed section 11 and outfeed section 12; the reference numbers denoting the various parts of each pocket 2 are shown in the enlarged detail views of Figure 1a and 2a and, for clarity, are not shown in the other drawings.

Each pocket 2 comprises an inlet 24 and an outlet 25 connected to the respective ducts 3. Further, each pocket 2 is defined by a first base surface 21 and by a second base surface 22, at least partly opposite each other, and by a lateral surface 23 extending between the first and second base surfaces 21, 22. Preferably, each pocket 2 comprises a single inlet 24 and a single outlet 25. The labyrinth path 4 characteristically changes the flow direction of the fluid repeatedly along more than two lines in space. The fluid flow is therefore particularly turbulent, with repeated widenings and restrictions of the flow section and with the fluid flowing in portions of the path 4 along several different lines. Each line of fluid flow is identified by a bundle of straight parallel lines without indication of direction. The ducts 3 are arranged along more than two lines in space. The respective ducts 3 connected to the inlet 24 and to the outlet 25 of each pocket 2 are arranged in space along lines that are oblique to each other.

In one particular embodiment, the steam flow path 4 prevents the fluid particles from moving along any ideal straight trajectory longer than twice the maximum dimension of one of the pockets 2 along which the trajectory extends. Obviously, the motion of the fluid in the labyrinth path 4 is much more complex than a straight trajectory such as this and will usually be considerably turbulent.

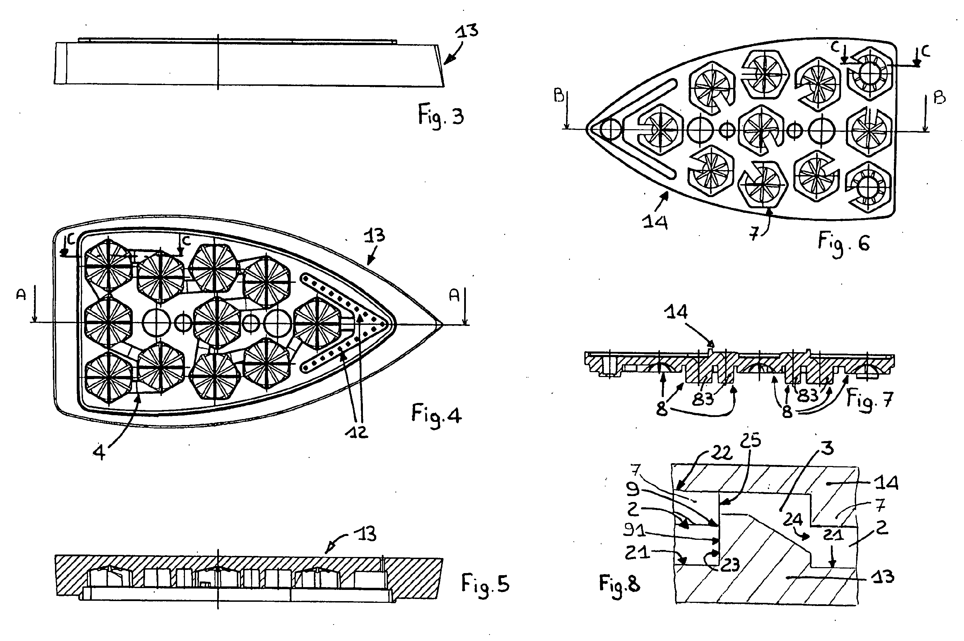

In the embodiment illustrated in Figure 8, the steam flow path 4 prevents the fluid particles from moving along any ideal straight trajectory longer than the sum of the length of the duct 3 plus the maximum dimension of one of the pockets 2 along which the trajectory extends. This prevents the drops of water carried by the fluid flow from moving undisturbed along the flow path 4. The water particles will in fact tend to collide with the walls of the path 4.

The path 4 comprises means 5 for intercepting and breaking up not only drops but also jets of liquid. The means 5 for intercepting and breaking up the liquid drops comprise the lateral surface 23 that delimits the pockets 2, the lateral surface 23 being advantageously shaped like the lateral surface 23 of a prism. The drops of water thus encounter a discontinuity at the edge or transit area between two adjacent walls of the lateral surface 23. Even if the duct 3 leading into each pocket 2 is made substantially tangent to a wall of the lateral surface 23 of the pocket 2, this discontinuity makes it easier to break up and stop the liquid particles. Breaking up the water drops is essential because small particles vaporise more easily than large particles. Also, the water particles are slowed down by the discontinuities and, owing to their weight, tend to be trapped in the pocket 2 until they are completely vaporised. This is facilitated by prolonged contact with the hot walls of the plate 1.

In particular, as shown in Figures 1 and 4, the lateral surface 23 that delimits the pockets 2 is shaped like the lateral surface 23 of a prism having a hexagonal base.

In another embodiment that is not illustrated, the lateral surface 23 has a series of internal grooves which extend substantially at right angles to the first and second base surfaces 21, 22 and which break up the drops of liquid.

The means 5 for intercepting and breaking up the liquid drops advantageously comprise protrusions 51 extending into the pocket 2. The protrusions 51 also help to break up the particles and facilitate evaporation. They also disturb the motion of the water particles. On smooth surfaces and curves without discontinuities, the water particles would otherwise tend to be carried along with the fluid flow by inertia.

The protrusions 51 are made on at least one of the base surfaces 21, 22. Preferably, as illustrated in Figures 1 and 2, the protrusions 51 are made on both the base surfaces 21, 22. As illustrated in Figures 1a and 2a, the protrusions 51 advantageously extend in radial fashion from the ideal centre of at least one of the base surfaces 21, 22.

If the plate 1 has a preferred orientation in space when used, then it will be possible to identify a bottom and a top. In this case, the protrusions 51 made on the base surface at the bottom of the pocket 2 are especially prominent so as to more effectively retain the liquid particles trapped by gravity inside the pocket 2. This keeps the liquid in contact with the hot walls of the pocket 2 for a longer time, thus facilitating vaporisation of the liquid droplets.

Even if the pockets 2 may be differently orientated from the plate 1, they may advantageously be similar in shape, so that the ratio between equivalent dimensions is constant. In particular, the pockets 2 may be identical. Some of the pockets 2 might differ in shape: Figure 2, for example, shows a cylindrical body 26 fitted into the first and third pockets 2 that the fluid meets as it flows along the path 4 in the plate 1. This cylindrical body 26 is positioned in front of the inlet 24 of the fluid in the pocket 2 and helps to stop and break up the liquid particles.

Advantageously, at least one of the ducts 3 is connected to the outlet 25 of at least one of the pockets 2 at least at the second base surface 22 and to the inlet 24 of the next pocket 2 at least at the first base surface 21. The next pocket 2 is the pocket 2 which, following the fluid flow along the path 4, is located just downstream of the pocket 2 being considered. Preferably, in the embodiment illustrated in Figure 8, at least one of the ducts 3 is connected to the outlet 25 of at least one of the pockets 2 at the second base surface 22 and to the inlet 24 of the next pocket 2 at the first base surface 21. Advantageously, all the intermediate pockets 2 might be connected in the manner described above. The duct 3 thus directs the fluid towards the first base surface 21.

The plate 1 advantageously comprises means 9 for retaining the liquid drops. The retaining means 9 comprise the pocket 2 lateral surface 23 which slopes from the first base surface 21 to the outlet 25 of the pocket 2 and creates a difference in level 91. More specifically, the difference in level 91 is the result of connecting at least one of the ducts 3 to the outlet 25 of the pocket 2 at the second base surface 22 and at same time causing the fluid to be fed into the pocket 2 through the inlet 24 at the first base surface 21, since the first and second base surfaces 21, 22 face each other at different levels.

The difference in level 91, in conjunction with the force of gravity, tends to trap the liquid drops in the pocket 2, facilitating their vaporisation and preventing them from being carried to the outlet section 12 of the plate 1.

The plate 1 might be made as a single part (embodiment not illustrated). However, in another embodiment illustrated by way of example in Figures 1 and 2, the plate 1 comprises at least one first shaped portion 13 and at least one second portion 14, separable from the first portion 13, the flow path 4 being defined by the combination of the first and second portions 13, 14 of the plate 1. Both the pockets 2 and the duct 3 are obtained by combining the first and second portions 13, 14 of the plate 1. The first portion 13 of the plate 1 comprises the first base surface 21 and the lateral surface 23 of the pockets 2, whilst the second portion 14 of the plate 1 comprises protuberances 7, whose bases have the shape of a polygon, extending along a first line at right angles to the first portion 13 of the plate 1. The protuberances 7 extend at right angles to a base surface 141 of the second portion 14, the base surface 141 being, during use, located opposite the first portion 13. Each protuberance 7 can be slotted into an opening 20 defined by the lateral surface 23 of the pockets 2 and is in contact with the lateral surface 23.

The protuberances 7 also comprise at least one concavity 70 at a base 71 and one groove 72 which puts the concavity 70 in communication with the outside of the protuberances 7. The protrusions 51 are made inside the concavity 70 at equal angular intervals from each other. The second base surface 22 of the pockets 2 advantageously coincides with the base 71 of the protuberances 7. The protuberances 7 narrow the duct 3 at least at the inlet 24 of each pocket 2, thus increasing the tortuousness of the path 4 and helping to stop the droplets of liquid.

The second portion 14 of the plate 1 comprises connecting means 8 having a predetermined taper and designed to be slotted into respective sockets 6 made in the first portion 13 of the plate 1, these sockets 6 also being shaped according to a predetermined taper angle so as to facilitate a secure connection between the first and second portions 13, 14 of the plate 1. Advantageously, but without limiting the invention, the connecting means 8 and the sockets 6 have the same taper angle. The connecting means 8 appropriately comprise the protuberances 7 which can be slotted into the respective openings 20 forming part of the sockets 6. The connecting means 8 also advantageously comprise truncated cone shaped elements 83 that can be slotted into matching housings 84 also forming part of the sockets 6. The connecting means 8 also preferably comprise a second edge 82 of the second portion 14, whilst the sockets 6 comprise a first edge 81 of the first portion 13. Both have a predetermined taper to improve the fit between them.

The first and second portions 13, 14 of the plate 1 are advantageously made by pressure die-casting which makes it possible to obtain complex shapes which are more problematic with more traditional casting methods. The first and second portions 13, 14 of the plate 1 are fastened to each other thanks to the mechanical interference produced when the connecting means 8 are fitted into the respective sockets 6. The second portion 14 is inserted into the first portion 13 with the aid of a press. The first and second portions 13, 14 of the plate 1 thus fit snugly into each other so as to facilitate the thermal uniformity of the plate 1. This effect is important to obtain a uniform temperature on all parts of the plate 1 even if only the first portion 13 is heated (as is normally the case). This facilitates evaporation of any liquid particles that may be present in the fluid flow and trapped in the pockets 2. To also guarantee a perfect fluid seal, the first and second edges 81, 82 are welded at the coupling area giving access to the outside of the plate 1. This permits considerably high speeds of production and assembly of the plate 1 to be attained.

The plate 1 according to the invention as described above may be advantageously applied to a steam iron or to a steam cooking device.

In use, the steam generated by a boiler is conveyed to the plate 1. During its transfer, the steam cools and tends to condense, forming particles of water. The steam mixed with the water droplets is forced to flow through the honeycomb-like labyrinth path 4 in the plate 1. The jet of steam enters each pocket 2 preferably oriented downwards towards the first base surface 21 which is preferably located at the bottom of the plate 1. The water particles are broken up by the protrusions 51 made on the first base surface 21. Break up is also made possible by the protrusions 51 on the second base surface 22 of the pocket 2 and by the discontinuities on the connecting edges between the walls of the lateral surface 23 of each pocket 2. The outlet 25 of each pocket 2 is advantageously located in the vicinity of the second base surface 22, positioned preferably at the top of the pocket 2. This makes the fluid path even more tortuous, thereby increasing the turbulence and preventing the liquid particles from being carried by the fluid flow undisturbed and instead causing them to collide with the walls of the flow path 4. The special labyrinth structure facilitates the breaking up and vaporisation of the water droplets; the labyrinth structure also holds back the drops of water, preventing them from flowing undisturbed and increasing the length of time that they are held in contact with the hot walls of the labyrinth path 4 of the plate 1. Thus, the water droplets absorb heat from the plate 1 and evaporate. Further, owing to the sudden widenings and restrictions in the flow section, any liquid particles that are carried along by the flow remain small and are thus vaporised more easily when they come into contact with the hot walls of the plate 1. Thus, moist steam without large drops of water in it is expelled from the plate 1.

The invention brings important advantages.

First of all, it prevents unwanted drops of liquid from being expelled from the plate.

Advantageously, it allows good thermal uniformity to be achieved inside the plate.

Another important advantage is that a device equipped with the plate is quick and easy to assemble.

In practice, the embodiments of the invention may be made from any material, and in any size, depending on requirements.

## Claims

1. A steam channelling plate having a specially shaped labyrinth path (4) for a fluid inside it, the path (4) comprising:
- a fluid infeed section (11);
- a fluid outfeed section (12);
- a plurality of pockets (2);
- ducts (3) fluid dynamically interconnecting the pockets (2) with each other and with the infeed section (11) and outfeed section (12);
each pocket (2) comprising an inlet (24) and an outlet (25) connected to the respective ducts (3) and each pocket (2) being defined by a first base surface (21) and by a second base surface (22), at least partly opposite each other, and by a lateral surface (23) extending between the first and second base surfaces (21, 22), the labyrinth path (4) changing the flow direction of the fluid repeatedly along more than two lines,
**characterised in that** the path (4) comprises means (5) for intercepting and breaking up drops of liquid which comprise protrusions (51) extending into the pockets (2), the protrusions (51) extending in radial fashion from the ideal centre of at least one of the base surfaces (21, 22).

2. The plate according to claim 1, **characterised in that** the ducts (3) as a whole are arranged along more than two lines in space.

3. The plate according to claim 1 or 2, **characterised in that** the ducts (3) connected to the inlet (24) and to the outlet (25) of each pocket (2) are arranged in space along lines that are oblique to each other.

4. The plate according to claim 1 or 2 or 3, **characterised in that** the steam flow path (4) prevents the fluid particles from travelling along any ideal straight trajectory that is longer than twice the maximum dimension of one of the pockets (2) along which the trajectory extends.

5. The plate according to claim 1 or 2 or 3, **characterised in that** the steam flow path (4) prevents the fluid particles from travelling along any ideal straight trajectory that is longer than the sum of the length of the duct (3) plus the maximum dimension of one of the pockets (2) along which the trajectory extends.

6. The plate according to any of the foregoing claims, **characterised in that** the means (5) for intercepting and breaking up drops of liquid comprise the lateral surface (23) that delimits the pockets (2), the lateral surface (23) being shaped like the lateral surface (23) of a prism.

7. The plate according to claim 6, **characterised in that** the lateral surface (23) that delimits the pockets (2) is shaped like the lateral surface (23) of a prism with a hexagonal base.

8. The plate according to any of the foregoing claims, **characterised in that** the protrusions (51) are made on at least one of the base surfaces (21, 22).

9. The plate according to any of the foregoing claims, **characterised in that** the protrusions (51) are made on both the base surfaces (21, 22).

10. The plate according to any of the foregoing claims, **characterised in that** the pockets (2) are similar in shape.

11. The plate according to any of the foregoing claims, **characterised in that** the pockets (2) are identical.

12. The plate according to any of the foregoing claims, **characterised in that** at least one of the ducts (3) is connected to the outlet (25) of at least one of the pockets (2) at least at the second base surface (22) and to the inlet (24) of the next pocket (2) at least at the first base surface (21).

13. The plate according to any of the foregoing claims from 1 to 12, **characterised in that** at least one of the ducts (3) is connected to the outlet (25) of at least one of the pockets (2) at the second base surface (22) and to the inlet (24) of the next pocket (2) at the first base surface (21).

14. The plate according to any of the foregoing claims, **characterised in that** it comprises ,means (9) for retaining the liquid drops.

15. The plate according to claim 14, **characterised in that** the retaining means (9) comprise the pocket (2) lateral surface (23) which slopes from the first base surface (21) to the outlet (25) of the pocket (2) to create a difference in level (91).

16. The plate according to any of the foregoing claims, **characterised in that** it comprises at least one first shaped portion (13) and at least one second portion (14), separable from the first, the flow path (4) being defined by the combination of the first and second portions (13, 14) of the plate (1).

17. The plate according to claim 16, **characterised in that** the first portion (13) of the plate (1) comprises the first base surface (21) and the lateral surface (23) of the pockets (2), while the second portion (14) of the plate (1) comprises protuberances (7) whose bases have the shape of a polygon, extending along a first line at right angles to the first portion 13 of the plate (1), each protuberance (7) being designed to be slotted into an opening (20) defined by the lateral surface (23) of the pockets (2) and being in contact with the lateral surface (23).

18. The plate according to claim 17 **characterised in that** the protuberances (7) narrow the duct (3) at least at the inlet (24) of each pocket (2).

19. The plate according to claim 17 or 18, **characterised in that** the protuberances (7) comprise at least one concavity (70) at a base (71) and one groove (72) which puts the concavity (70) in communication with the outside of the protuberances (7).

20. The plate according to any of the foregoing claims from 16 to 19, **characterised in that** the second portion (14) of the plate (1) comprises connecting means (8) having a predetermined taper and designed to be slotted into respective sockets (6) made in the first portion (13) of the plate (1), also shaped according to a predetermined taper angle.

21. The plate according to any of the foregoing claims, **characterised in that** each pocket (2) comprises a single inlet (24) and a single outlet (25).

22. A steam iron **characterised in that** it comprises a plate (1) according to any of the foregoing claims.

23. A steam cooking device **characterised in that** it comprises a plate (1) according to any of the foregoing claims from 1 to 21.

## Patentansprüche

1. Dampfleitungsplatte mit einer speziell geformten Labyrinthbahn (4) für ein darin enthaltenes Fluid, wobei die Bahn (4) enthält:
- einen Fluid-Einlassabschnitt (11);
- einen Fluid-Auslassabschnitt (12);
- eine Anzahl von Zellen (2);
- Kanäle (3), welche strömungsdynamisch die Zellen (2) miteinander und mit dem Einlassabschnitt (11) und dem Auslassabschnitt (12) verbinden;
wobei jede Zelle (2) einen Einlass (24) und einen Auslass (25) enthält, angeschlossen an die jeweiligen Kanäle (3), und wobei jede Zelle (2) durch eine erste Basisfläche (21) und durch eine zweite Basisfläche (22) beschrieben wird, die sich wenigstens teilweise einander gegenüberliegen, und durch eine Seitenfläche (23), die sich zwischen den ersten und zweiten Basisflächen (21, 22) erstreckt, wobei die Labyrinthbahn (4) die Strömungsrichtung des Fluids wiederholt entlang von mehr als zwei Verlausrichtungen wechselt, **dadurch gekennzeichnet, dass** die Bahn (4) Mittel (5) zum Abfangen und Brechen von Flüssigkeitstropfen hat, welche Vorsprünge (51) enthalten, die sich in die Zellen (2) erstrecken, wobei die Vorsprünge (51) sich in radialer Weise von der ideellen Mitte von wenigstens einer der Basisflächen (21, 22) aus erstrecken.

2. Platte nach Patentanspruch 1, **dadurch gekennzeichnet, dass** die Kanäle (3) räumlich insgesamt entlang von mehr als zwei Verlaufsrichtungen angeordnet sind.

3. Platte nach Patentanspruch 1 oder 2, **dadurch gekennzeichnet, dass** die an den Einlass (24) und an den Auslass (25) einer jeden Zelle (2) angeschlossenen Kanäle (3) räumlich entlang von Verlaufsrichtungen angeordnet sind, welche zueinander schräg verlaufen.

4. Platte nach Patentanspruch 1 oder 2 oder 3, **dadurch gekennzeichnet, dass** die Dampfströmungsbahn (4) die Flüssigkeitspartikel daran hindert, sich entlang jeder ideellen geradlinigen Bahn zu bewegen, die länger ist als das Doppelte der maximalen Abmessung von einer der Zellen (2), entlang welcher sich die Bahn erstreckt.

5. Platte nach Patentanspruch 1 oder 2 oder 3, **dadurch gekennzeichnet, dass** die Dampfströmungsbahn (4) die Flüssigkeitspartikel daran hindert, sich entlang jeder ideellen geradlinigen Bahn zu bewegen, die länger ist als die Summe der Länge des Kanals (3) und der maximalen Abmessung von einer der Zellen (2), entlang welcher sich die Bahn erstreckt.

6. Platte nach einem beliebigen der vorstehenden Patentansprüche, **dadurch gekennzeichnet, dass** die Mittel (5) zum Abfangen und Brechen der Flüssigkeitstropfen die Seitenfläche (23) enthalten, welche die Zellen (2) abgrenzt, wobei die Seitenfläche (23) wie die Seitenfläche (23) eines Prismas geformt ist.

7. Platte nach Patentanspruch 6, **dadurch gekennzeichnet, dass** die Seitenfläche (23), welche die Zellen (2) abgrenzt, wie die Seitenfläche (23) eines Prismas mit einer hexagonalen Basis geformt ist.

8. Platte nach einem beliebigen der vorstehenden Patentansprüche, **dadurch gekennzeichnet, dass** die Vorsprünge (51) an wenigstens einer der Basisflächen (21, 22) hergestellt sind.

9. Platte nach einem beliebigen der vorstehenden Patentansprüche, **dadurch gekennzeichnet, dass** die Vorsprünge (51) an wenigstens einer der Basisflächen (21, 22) hergestellt sind.

10. Platte nach einem beliebigen der vorstehenden Patentansprüche, **dadurch gekennzeichnet, dass** die Zellen (2) ähnlich in der Form sind.

11. Platte nach einem beliebigen der vorstehenden Patentansprüche, **dadurch gekennzeichnet, dass** die Zellen (2) identisch in der Form sind.

12. Platte nach einem beliebigen der vorstehenden Patentansprüche, **dadurch gekennzeichnet, dass** wenigstens einer der Kanäle (3) an den Auslass (25) von wenigstens einer der Zellen (2) an wenigstens der zweiten Basisfläche (22) und an den Einlass (24) der nächsten Zelle (2) an wenigstens der ersten Basisfläche (21) angeschlossen ist.

13. Platte nach einem beliebigen der vorstehenden Patentansprüche von 1 bis 12, **dadurch gekennzeichnet, dass** wenigstens einer der Kanäle (3) an den Auslass (25) von wenigstens einer der Zellen (2) an der zweiten Basisfläche (22) und an den Einlass (24) der nächsten Zelle (2) an der ersten Basisfläche (21) angeschlossen ist.

14. Platte nach einem beliebigen der vorstehenden Patentansprüche, **dadurch gekennzeichnet, dass** sie Mittel (9) zum Zurückhalten der Flüssigkeitstropfen enthält.

15. Platte nach Patentanspruch 14, **dadurch gekennzeichnet, dass** die Rückhaltmittel (9) die Seitenfläche (23) der Zelle (2) enthalten, welche von der ersten Basisfläche (21) bis zu dem Auslass (25) abgeschrägt ist, um einen Höhenunterschied (91) zu bilden.

16. Platte nach einem beliebigen der vorstehenden Patentansprüche, **dadurch gekennzeichnet, dass** sie wenigstens einen ersten geformten Abschnitt (13) enthält und wenigstens einen zweiten Abschnitt (14), getrennt von dem ersten, wobei die Strömungsbahn (4) durch die Kombination der ersten und zweiten Abschnitte (13, 14) der Platte (1) beschrieben wird.

17. Platte nach Patentanspruch 16, **dadurch gekennzeichnet, dass** der erste Abschnitt (13) der Platte (1) die erste Basisfläche (21) und die Seitenfläche (23) der Zellen (2) enthält, während der zweite Abschnitt (14) der Platte (1) Vorsprünge (7) enthält, deren Basen die Form eines Vielecks haben, sich erstreckend entlang einer ersten Verlaufsbahn in rechten Winkeln zu dem ersten Abschnitt (13) der Platte (1), wobei jeder Vorsprung (7) dazu vorgesehen ist, in eine durch die Seitenfläche (23) der Zellen (2) gebildete Öffnung (20) eingesetzt zu werden und mit der Seitenfläche (23) im Kontakt zu sein.

18. Platte nach Patentanspruch 17, **dadurch gekennzeichnet, dass** die Vorsprünge (7) den Kanal (3) wenigstens an dem Einlass (24) einer jeden Zelle (2) verengen.

19. Platte nach Patentanspruch 17 oder 18, **dadurch gekennzeichnet, dass** die Vorsprünge (7) wenigstens eine Vertiefung (70) an einer Basis (71) enthalten und eine Rille (72), welche die Vertiefung (70) mit dem Aussenbereich des Vorsprunges (7) in Verbindung bringt.

20. Platte nach einem beliebigen der vorstehenden Patentansprüche von 16 bis 19, **dadurch gekennzeichnet, dass** der zweite Abschnitt (14) der Platte (1) Verbindungsmittel (8) von einer bestimmten Konizität hat, dazu bestimmt, in jeweilige Sitze (6) eingesetzt zu werden, die in den ersten Abschnitt (13) der Platte (1) eingearbeitet sind, ebenfalls geformt nach einem vorgegebenen Konizitätswinkel.

21. Platte nach einem beliebigen der vorstehenden Patentansprüche, **dadurch gekennzeichnet, dass** jede Zelle (2) einen einzigen Einlass (24) und einen einzigen Auslass (25) enthält.

22. Dampfbügeleisen, **dadurch gekennzeichnet, dass** es eine Platte (1) nach einem beliebigen der vorstehenden Patentansprüche enthält.

23. Dampfgarvorrichtung, **dadurch gekennzeichnet, dass** sie eine Platte (1) nach einem beliebigen der vorstehenden Patentansprüche von 1 bis 21 enthält.

## Revendications

1. Plaque pour diriger la vapeur pourvue en son intérieur d'un parcours labyrinthique (4) spécialement conformé pour un fluide, le parcours comprenant:
- une section (11) d'entrée du fluide;
- une section (12) de sortie du fluide;
- une pluralité d'alvéoles (2);
- des conduits (3) connectant de manière fluidodynamique les alvéoles (2) entre elles et avec la section d'entrée (11) et la section de sortie (12); chaque alvéole (2) comprenant une entrée (24) et une sortie (25) connectées aux respectifs conduits (3), et chaque alvéole (2) étant définie par une première surface de base (21) et par une seconde surface de base (22), au moins partiellement opposées entre elles, et par une surface latérale (23) s'étendant entre la première et la seconde surface de base (21, 22), le parcours labyrinthique (4) changeant la direction du flux du fluide de manière répétée le long de plus de deux directions, **caractérisée en ce que** le parcours (4) comprend des moyens (5) d'interception et de fragmentation de gouttes de liquide comprenant des nervures (51) s'étendant dans les alvéoles (2), les nervures (51) s'étendant radialement à partir du centre idéal d'au moins l'une des surfaces de base (21, 22).

2. Plaque selon la revendication 1, **caractérisée en ce que** les conduits, (3) dans leur ensemble sont disposés le long de plus de deux directions dans l'espace.

3. Plaque selon la revendication 1 ou 2, **caractérisée en ce que** les conduits (3) connectés à l'entrée (24) et à la sortie (25) de chaque alvéole (2) sont disposés dans l'espace le long de directions obliques l'une par rapport à l'autre.

4. Plaque selon la revendication 1, 2 ou 3, **caractérisée en ce que** le parcours du flux de vapeur (4) empêche les particules de fluide de se déplacer le long une trajectoire idéale rectiligne plus longue que le double de la dimension maximum de l'une des alvéoles (2) le long de laquelle se développe la trajectoire.

5. Plaque selon la revendication 1, 2 ou 3, **caractérisée en ce que** le parcours du flux de vapeur (4) empêche les particules de fluide de se déplacer le long d'une trajectoire idéale rectiligne plus longue que la somme des longueurs du conduit (3) plus la dimension maximum de l'une des alvéoles (2) le long de laquelle se développe la trajectoire.

6. Plaque selon l'une des revendications précédentes, **caractérisée en ce que** les moyens (5) d'interception et de fragmentation des gouttes de liquide comprennent la surface latérale (23) qui délimite les alvéoles (2), la surface latérale (23) étant formée comme la surface latérale (23) d'un prisme.

7. Plaque selon la revendication 6, **caractérisée en ce que** la surface latérale (23) qui délimite les alvéoles (2) est formée comme la surface latérale (23) d'un prisme pourvu d'une base hexagonale.

8. Plaque selon l'une quelconque des revendications précédentes, **caractérisée en ce que** les nervures (51) sont formées sur au moins l'une des surfaces de base (21, 22).

9. Plaque selon l'une des revendications précédentes, **caractérisée en ce que** les nervures (51) sont formées sur les deux surfaces de base (21, 22).

10. Plaque selon l'une des revendications précédentes, **caractérisée en ce que** les alvéoles (2) sont de forme similaire.

11. Plaque selon l'une quelconque des revendications précédentes, **caractérisée en ce que** les alvéoles (2) sont identiques.

12. Plaque selon l'une quelconque des revendications précédentes, **caractérisée en ce qu'**au moins l'un des conduits (3) est connecté à la sortie (25) d'au moins l'une des alvéoles (2) au moins en correspondance de la seconde surface de base (22) et à l'entrée (24) de l'alvéole (2) suivante au moins en correspondance de la première surface de base (21).

13. Plaque selon l'une quelconque des revendications précédentes 1 à 12, **caractérisée en ce qu'**au moins l'un des conduits (3) est connecté à la sortie (25) d'au moins l'une des alvéoles (2) en correspondance de la seconde surface de base (22) et à l'entrée (24) de l'alvéole suivante (2) en correspondance de la première surface de base (21).

14. Plaque selon l'une quelconque des revendications précédentes, **caractérisée en ce qu'**elle comprend des moyens (9) de retenue des gouttes liquides.

15. Plaque selon la revendication 14, **caractérisée en ce que** les moyens de retenue (9) comprennent la surface latérale (23) de l'alvéole (2) qui crée une différence de niveau (91) entre la première surface de base (21) et la sortie (25) de l'alvéole (2).

16. Plaque selon l'une quelconque des revendications précédentes, **caractérisée en ce qu'**elle comprend au moins une première partie (13) façonnée et au moins une seconde partie (14), séparable de la première, le parcours du flux (4) étant défini par la combinaison de la première et de la seconde partie (13, 14) de la plaque (1).

17. Plaque selon la revendication 16, **caractérisée en ce que** la première partie (13) de la plaque (1) comprend la première surface de base (21) et la surface latérale (23) des alvéoles (2), alors que la seconde partie (14) de la plaque (1) comprend des protubérances (7) dont les bases ont la forme d'un polygone, se développant le long d'une première direction orthogonale à la première partie (13) de la plaque (1), chaque protubérance (7) étant conçue pour être insérée dans une ouverture (20) définie par la surface latérale (23) des alvéoles (2) et étant en contact avec la surface latérale (23).

18. Plaque selon la revendication 17, **caractérisée en ce que** les protubérances (7) resserrent le conduit (3) au moins en correspondance de l'entrée (24) de chaque alvéole (2).

19. Plaque selon la revendication 17 ou 18, **caractérisée en ce que** les protubérances (7) comprennent au moins une concavité (70) en correspondance d'une base (71) et une rainure (72) qui met en communication la concavité (70) avec l'extérieur des protubérances (7).

20. Plaque selon l'une quelconque des revendications précédentes 16 à 19, **caractérisée en ce que** la seconde portion (14) de la plaque (1) comprend des moyens de connexion (8) présentant une conicité prédéterminée et conçus pour être insérés dans de respectives alvéoles (6) formées dans la première portion (13) de la plaque (1), elle-aussi présentant un angle de conicité prédéterminé.

21. Plaque selon l'une quelconque des revendications précédentes, **caractérisée en ce que** chaque alvéole (2) comprend une seule entrée (24) et une seule sortie (25).

22. Fer à repasser à vapeur, **caractérisé en ce qu'**il comprend une plaque (1) selon l'une quelconque des revendications précédentes.

23. Dispositif de cuisson à la vapeur, **caractérisé en ce qu'**il comprend une plaque (1) selon l'une quelconque des revendications précédentes 1 à 21.
